# EUROPÄISCHE PATENTANMELDUNG

(11) **EP 0 713 839 A1**
(43) Veröffentlichungstag der Anmeldung: **29.05.1996**
(21) Anmeldenummer: 94120261.6
(22) Anmeldetag: 21.12.1994
(51) Int. Cl.: B66C 23/42, B66C 19/00, B66C 23/82, B60P 1/54

(54) **Aufbaukran**

(30) Priorität: 25.11.1994 DE 4441993
(71) Anmelder: Becker-Prünte Maschinen- und Anlagenbau GmbH, 45711 Datteln (DE)
(72) Erfinder: Meyer, Lothar, D-45657 Recklinghausen (DE); Weber, Norbert, D-45711 Datteln (DE); Zurawski, Werner, D-65510 Idstein (DE)
(74) Vertreter: Herrmann-Trentepohl, Werner, Dipl.-Ing.

(57) **Zusammenfassung**

Bei einem Aufbaukran (6) als Ladehilfe für Pritschenfahrzeuge (1) ist erfindungsgemäß vorgesehen, daß der Aufbaukran (6) als säulenloser Brückenkran ausgebildet ist, dessen Portal (7) beiderseits der Ladefläche (2) auf dem Fahrgestell des Fahrzeuges (1) geführt und angetrieben ist.

## Beschreibung

Die Erfindung betrifft einen Aufbaukran als Ladehilfe für Pritschenfahrzeuge gemäß dem Oberbegriff des Anspruches 1.

Der erfindungsgemäße Aufbaukran ist für das Laden und Entladen von Gütern vorgesehen, die ein Einzelgewicht aufweisen, das sich nicht mehr von Hand bewältigen läßt. Solche Güter sind andererseits so beschaffen, daß sie nicht ohne Ladehilfe, beispielsweise durch Kippen der Ladefläche entladen werden können ohne Schaden zu nehmen. Ein Beispiel für die Erfindung sind deshalb sogenannte Steintransporter, die auf ihrer Pritsche Steinpakete vom Hersteller zur Baustelle oder auch innerbetrieblich von einem Ofen oder einem Autoklaven, in dem sie gehärtet werden zur Zwischenlagerung auf einen Stapelplatz transportiert werden. In diesen Fällen hat der erfindungsgemäße Aufbaukran eine Steinzange, mit der die Steinpakete erfaßt werden können.

Der erfindungsgemäße Aufbaukran ist auf dem Fahrzeug installiert und erübrigt daher besondere Hebezeuge, die das Auf- und Abladen der Steinpakete übernehmen können. Solche Aufbaukräne ermöglichen eine erhebliche Rationalisierung, weil der Fahrer des Fahrzeuges das Be- und Entladen selber übernimmt und daher ohne anderweitige Hilfe auskommt. Der Kran ist deswegen so ausgebildet, daß sein Wirkungskreis nicht nur die gesamte Ladefläche erfaßt, sondern auch das gesamte Umfeld der Standfläche des Fahrzeuges, so daß die Ladung an beiden Schmalseiten und an der Rückseite der Pritsche erfaßt werden kann. Bei Kleintransportern ist das von großem Vorteil, weil an den Baustellen die Stapelflächen meistens klein und so gewählt sind, daß sie möglichst nah an dem Gebäude liegen, die Zufahrtsmöglichkeiten aber in der Regel beschränkt sind. Die Erfindung wird deshalb im folgenden anhand ihres bevorzugten Anwendungsgebietes der Steintransporter weiter erläutert.

Die vorbekannten Steintransporter verwenden durchweg Säulenkräne mit meistens mehrfach faltbarem Ausleger, um einerseits die Ladefläche des Fahrzeuges überstreichen zu können und um andererseits den Kran aus seiner Betriebsstellung in eine Transportstellung zu verbringen, in der er das Fahrzeugprofil nicht überschreitet. Solche Kräne müssen auf dem Fahrzeug stationär montiert werden, da fahrbare Kräne die Ladefläche der Pritsche nicht befahren können, wenn diese von den Steinpaketen in Anspruch genommen wird. Bei schweren Transportfahrzeugen und langen Auslegern wird der Kran häufig auf der Mitte der Pritsche aufgebaut, um den Ausleger zu verkürzen. Bei kürzeren Pritschen baut man den Kran dagegen hinter dem Fahrerhaus auf und schließt die Pritsche an die Kranverlagerung an. In diesen Fällen ergibt sich jedoch durch die Kranverlagerung eine ungünstige Einschränkung der Pritschenlänge und damit der Ladefläche, die die Nutzlast vermindert.

Bei anderen Ausführungen wird deswegen der Ladekran hinter der Ladefläche am Heck der Pritsche aufgebaut, um die volle Länge des Chassis für die Pritsche zu nutzen. Der auf einem Ausleger montierte stationäre Ladekran verlängert dann aber die Gesamtlänge des Fahrzeuges und vermindert dessen Manövrierbarkeit entsprechend.

Gemeinsam ist den vorbekannten Aufbaukränen die Kransäule, welche die Drehbarkeit des Auslegers um eine senkrechte Schwenkachse in beiden Richtungen um einen Vollkreis ermöglicht. Wegen des großen Gewichts der Steinpakete und der erheblichen Auslegerlängen wird die Kransäule bei gestrecktem Ausleger mit dem Maximalmoment belastet, das sie auf dem Chassis abtragen muß. Deshalb muß die Kranverlagerung auf der Standfläche des Fahrzeuges abgestützt werden. Außerdem wird durch die erforderliche schwere Ausführung der Kransäule die Nutzlast des Fahrzeuges insgesamt ungünstig vermindert.

Die Erfindung geht anders vor. Ihr Grundgedanke ist im Anspruch 1 wiedergegeben. Weitere Merkmale der Erfindung sind Gegenstand der Unteransprüche.

Erfindungsgemäß wird durch die Überbrückung der Beladung mit der Unterkonstruktion des Aufbaukranes jede Inanspruchnahme von Pritschenflächen, die beladen werden können, vermieden und durch die Führung und den Antrieb des Kranes erreicht, daß dieser auch ausgedehnte Ladeflächen überstreichen und eine ausreichend große Stapelfläche erreichen kann, die sich um die Standfläche des Fahrzeuges erstreckt. Insbesondere kann der erfindungsgemäße Aufbaukran nunmehr auch das Ladegut unmittelbar hinter und in größerem Abstand vom Fahrzeugheck absetzen. Bei Steintransportern ist das von erheblicher praktischer Bedeutung, wenn beispielsweise die Baustellenzufahrt ein Zurücksetzen des Fahrzeuges erforderlich macht und die Steinpakete unmittelbar in der Nähe der Fundamente des Gebäudes abgesetzt werden sollen.

Da das Portal die Unterkonstruktion des Kranes bildet, kann eine bevorzugte Ausführungsform der Erfindung nach Anspruch 2 auf eine Kransäule verzichten, da hierfür ein Drehkranz vorgesehen ist, der unbegrenzte Drehungen des Kranauslegers um eine senkrechte Achse in beiden Richtungen ermöglicht und außerdem die Lager des Auslegers trägt, welche das Wippen des Auslegers ermöglicht. Hierdurch werden die Lastmomente, welche bereits infolge der durch die Verfahrbarkeit verkürzten Auslegerlänge herabgesetzt sind, weiter vermindert. Die Erfindung läßt sich daher mit geringem Konstruktionsgewicht verwirklichen, was in einer weiteren Vergrößerung der Nutzlast des Fahrzeuges mündet.

Der Wippausleger wird gemäß der Ausführungsform des Anspruches 3 erfindungsgemäß zweckmäßig so ausgeführt, daß er in beliebigen Drehstellungen des Drehkranzes seine Fahrstellung einnehmen kann und dabei eine möglichst geringe Höhe in Anspruch nimmt. Deswegen wird in dieser Ausführungsform ein teleskopierbarer Wippausleger angewandt, da faltbare Wippausleger je nach Art ihrer Faltung einen erheblich größeren Raumbedarf in Anspruch nehmen und deshalb auch lange Teilstücke für dieselbe Reichweite wie bei einem Teleskopausleger erforderlich machen; dann läßt sich der Aufbaukran nur in einer bestimmten Drehlage innerhalb des Fahrzeugprofils verstauen. Erfindungsgemäß ist das nicht erforderlich, was eine erhebliche Erleichterung bei der Bedienung des Aufbaukrans durch den Fahrzeugführer bedeutet.

Mit den Merkmalen des Anspruches 4 läßt sich erreichen, daß sich der Auslegerantrieb vereinfacht und seinerseit dazu beiträgt, die für den Ausleger notwendige Höhe zu verkleinern. Üblicherweise müssen Wippausleger nämlich mit Arbeitszylindern angetrieben werden, deren Länge und Raumbedarf von dem Bogenwinkel abhängt, über den der Ausleger wippt. Dadurch, daß erfindungsgemäß der Ausleger als Doppelwippe ausgebildet wird, läßt sich der gewünschte Arbeitsbereich der Wippe unterteilen, was eine Verkürzung der Arbeitszylinder ermöglicht. Diese Unterteilung wird zweckmäßig mit den Merkmalen des Anspruches 5 verwirklicht.

Erfindungsgemäß wird ferner angestrebt und erreicht, die für die Führung und den Antrieb des Portals erforderliche Konstruktion einerseits die Breite der Ladefläche nicht vermindert, aber andererseits auch unter den Bedingungen des praktischen Fahrbetriebes nicht versagen kann. Dies gelingt mit den Merkmalen des Anspruches 6. Hiernach besteht die Führung aus beiderseits der Ladefläche angeordneten Schienen mit einem Profil, das ein Spurkranzrollengleis ergibt. Die Führung des Portals ist dadurch spurtreu, so daß das Portal nicht entgleisen kann, gewahrleistet aber einen hohen Flächendruck auf den Schienenköpfen, auf denen sich die Spurkranzrollen abwälzen. Dieser verhindert einen Schlupf der angetriebenen Rollen. Wenn mit Verunreinigung der Ladefläche infolge des Fahrbetriebes oder wegen der Ladung gerechnet werden muß, was bei Steintransportern allein durch den Abrieb der Steine hervorgerufen wird, reinigen sich die Schienen selbst, wodurch ein sicherer Betrieb des Portals gewährleistet ist.

Insbesondere können unter diesen Gesichtspunkten die Merkmale des Anspruches 7 verwirklicht werden. Hierbei lassen sich die Schienen des Fahrgleises in horizontalem Abstand von den Längskanten der Ladefläche mit den Kranträgern anordnen, wodurch ein Zwischenraum für die bei der Selbstreinigung der Schienen des Spurkranzrollengleises gelösten Partikel entsteht, die dann neben das Fahrzeug fallen.

Die Selbstreinigung wird ferner zweckmäßig mit den Merkmalen des Anspruches 8 verbessert. Rechteckprofile haben eine für die Selbstreinigung günstige schmale Lauffläche, deren vergleichsweise geringe Führungseigenschaften aber durch die Ausbildung der Portalrollen als Doppelspurkranzrollen ausgeglichen werden kann. Doppelspurkranzrollen werden auch deshalb benutzt, um gute Führungseigenschaften auch dann zu erreichen, wenn Lasten bei seitlicher Auslage des Kranauslegers, die gegenüberliegenden Doppelspurkranzräder so weit entlasten, daß Druckrollen zum Tragen kommen, so daß in diesem Fall nur die belasteten Doppelspurkranzräder Antriebsfunktion übernehmen können. Die belastete Schiene übernimmt dann auch der größte Teil der Führung. Die Doppelspurkranzrollen werden bevorzugt synchronisiert angetrieben. Die Elastizitäten des Portals sind definiert, um das Arbeiten der gegenüberliegenden Doppelspurkranzrollenpaare gegeneinander zu vermeiden.

Die Einzelheiten, weiteren Merkmale und andere Vorteile der Erfindung ergeben sich aus der nachfolgenden Beschreibung einer Ausführungsform anhand der Figuren in der Zeichnung; es zeigen
- Fig. 1: eine Draufsicht auf den Aufbaukran,
- Fig. 2: einen Teilschnitt zur Wiedergabe der Führung des Portals im wesentlichen im Schnitt längs der Linie II - II der Fig. 1,
- Fig. 3: eine Seitenansicht des Gegenstandes der Fig. 1 und
- Fig. 4: schematisch die Bewegungsmöglichkeiten des Auslegers auf dem Portal in Ansicht.

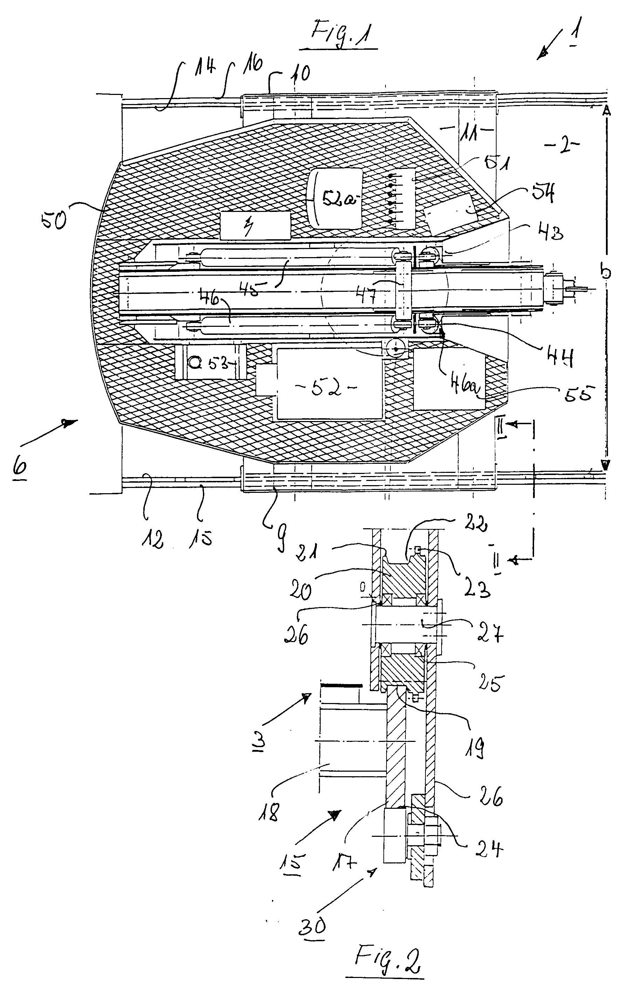

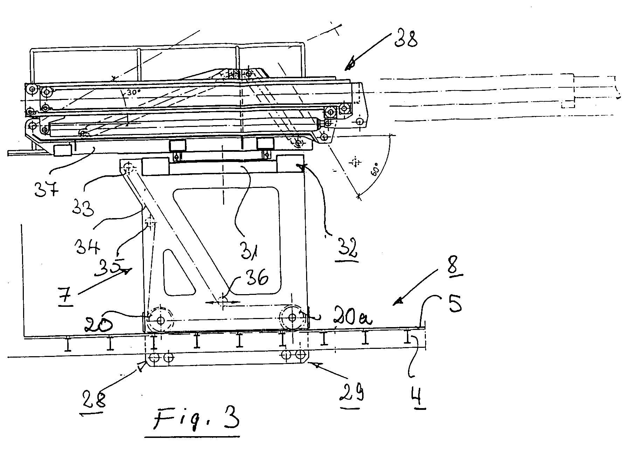

In Fig. 1 ist ein Pritschenfahrzeug bei 1 schematisch dargestellt. Die Ladefläche 2 erstreckt sich in der Längsachse des Fahrgestells, das bei 3 in Fig. 2 angedeutet ist und nach Fig. 3 eine Mehrzahl von Querträgern 4 aufweist, welche den Belag 5 der Ladefläche unterstützen. Die Ladefläche ist beispielsweise zum Absetzen von Steinpaketen vorgesehen, die in parallelen Reihen in Fahrzeuglängsrichtung angeordnet sind und die gesamte Ladefläche 2 in Anspruch nehmen. Als Ladehilfe dient ein Aufbaukran 6, der mit einem Portal 7 die auf der Pritsche 8 abgesetzte und nicht dargestellte Beladung überbrückt, wobei die lichte Breite des Portals zwischen den Portalstützen 9, 10 so gewählt ist, daß auch die volle Breite b (Fig. 1) für die Ladung zur Verfügung steht, die Portalstützen 9, 10 also außerhalb des Lichtraumprofils der Pritsche 8 und ihrer Beladung liegen. Die Höhe der Portalbrücke 11 über der Ladefläche 2, d. h. dem Belag 5 ist andererseits so gewählt, daß sich eine geringe Höhe des Fahrzeugaufbaus für die Transportfahrt ergibt. Das Portal 7 ist beiderseits der Beladungsfläche 2 auf dem Fahrgestell geführt. Dazu dienen andererseits parallel zu den Längskanten 12, 14 der Pritsche Schienen 15, 16, die ein Spurkranzrollengleis bilden. Diese Schienen bestehen gemäß der Darstellung der Fig. 2, wie am Beispiel der Schiene 15 gezeigt aus Flachprofilen 17, welche mit ihrer längeren Profilachse senkrecht zur Ebene der Ladefläche 2 orientiert und mit Hilfe von Kragträgern 18 an das Fahrgestell 3 angeschlossen sind. Der Schienenkopf 19, welcher von einer kurzen Seite des Rechteckprofils gebildet wird, dient als Lauffläche der Spurkranzrollen 20, welche an jeder Seite wie aus Fig. 3 ersichtlich paarweise an einer Portalstütze 9, 10 angebracht sind. In Fig. 2 ist eine Antriebsrolle wiedergegeben. Der doppelte Spurkranz ist mit 21, 22 bezeichnet. Der außenliegende Spurkranz trägt eine Verzahnung 23, die mit der Antriebskette des nicht dargestellten Antriebsmotors kämmt. Die Doppelspurkranzrolle 20 ist mit Wälzlagern 25, 26 auf ihrer festen Achse 27 gelagert und auf der Außenseite in einer Verlängerung 26 der Portalstütze befestigt. Diese trägt am unteren Ende je einen mit jeder Doppelspurkranzrolle zusammenwirkendes Stützrollenpaar 28, 29, das sich auf der unteren Schmalseite 24 des Schienenprofils abwälzt. Die synchron angetriebenen Doppelspurkranzrollen 20, 20a besitzen einen gemeinsamen Motor, der auf einem Kettenritzel 33 arbeitet und dadurch je einen Kettentrieb 34 antreibt, der bei 35 umgelenkt ist und eine Spannvorrichtung bei 36 aufweist (Fig. 3). Ihre seitlichen Führungskräfte sind durch definierte Elastizitäten im Portal begrenzt.

Auf der Brücke 11 des Portals 7 ist der stationäre Teil 31 eines Drehkranzes 32 verlagert. Der bewegliche beil 37 des Drehkranzes dient zur Verlagerung eines Wippauslegers 38. Dieser Wippausleger ist in mehrere Teleskope unterteilt, so daß sich im Ausführungsbeispiel ein Grundausleger 39 mit einer Teleskopführung 40 für ein Mittelstück 41 ergibt, das in seinem Teleskop 42 einen Endausleger 43 führt. Die Teleskope 40 und 42 sind hydraulisch mit eingebauten Arbeitszylindern angetrieben.

Das Wippwerk des Auslegers 38 besteht aus zwei gegenläufigen Motoren, von denen einer zum Abschwenken und der andere zum Aufschwenken des Wippauslegers 38 dient. Der zum Aufschwenken dienende Motor wird von zwei hydraulischen Arbeitszylindern 43, 44 gebildet, die auf ein gemeinsames Joch 46a des Grundauslegers 39 wirken, während der zum Abschwenken dienende Motor seinerseits aus zwei hydraulischen Arbeitszylindern 45, 46 besteht, die auf ein ihnen zugeordnetes Joch 47 gemeinsam wirken, das an der Wippe befestigt ist.

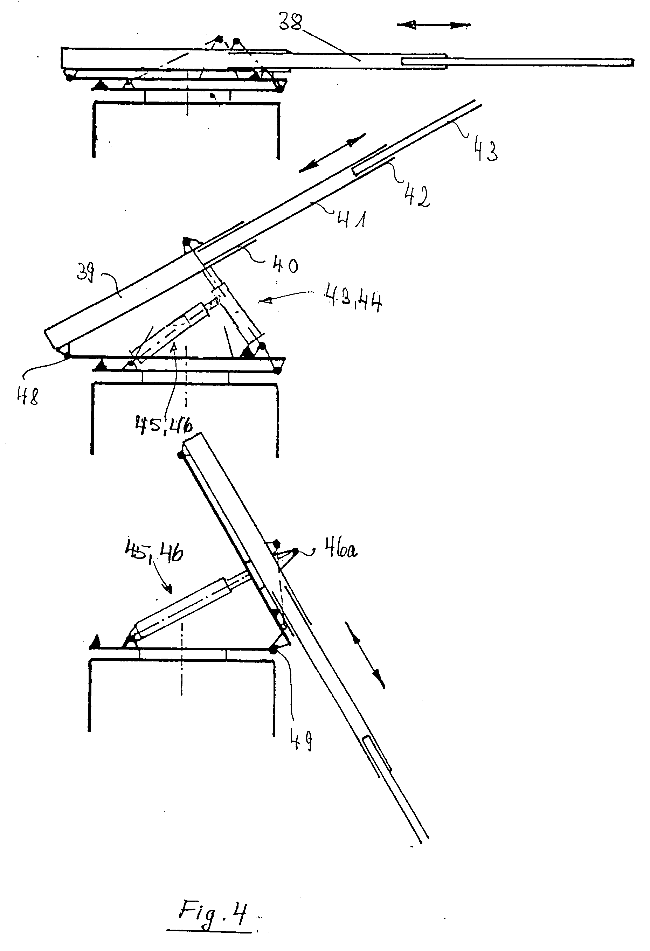

Aus Fig. 4 ist zu entnehmen, daß der Wippausleger 38 mit diesen Antrieben eine Doppelwippe bildet. Wie der oberen Darstellung entnommen werden kann, kann der Wippausleger 38 bei eingefahrenen Kolbenstangen der Arbeitszylinder horizontal gehalten und in horizontaler Ebene gedreht werden. Wird der zum Aufwärtswippen dienende Antrieb aus den Zylindern 43 und 44 ausgefahren, so schwenkt der Ausleger nach oben, nachdem er zuvor in einem Wipplager 48 drehbar verankert worden ist. Aus der mittleren Darstellung der Fig. 4 ergibt sich diese Bewegung des Auslegers. Daraus ist erkennbar, daß der zweite Wippantrieb aus den Zylindern 45 und 46 bei dieser Schwenkbewegung des Auslegers stillgelegt ist.

Aus der unteren Darstellung der Fig. 4 ist ein zweites Wipplager 49 ersichtlich, in dem der Wippausleger mit Hilfe des Wippantriebes 45, 46 nach unten geschwenkt werden kann. In der oberen horizontalen Lage des Wippauslegers 38 und bei Betätigung der Teleskope im einziehenden Sinn erreicht in den Endstellungen der Ausleger 38 seine horizontale Fahrstellung. Er kann diese Fahrstellung durch Betätigung der betreffenden Antriebe auf beiden Extremlagen einnehmen, die in der mittleren und unteren Darstellung der Fig. 4 wiedergegeben sind. In der Fahrstellung und bei eingezogenen Teleskopen ist der Ausleger 38 so verkürzt, daß er sich mit seinen Enden innerhalb des Profils der Fahrzeugbreite befindet. Da der Kran aber niedrig baut, kann er auch mit gestrecktem Anleger gefahren werden.

Neben dem Ausleger 38 ist auf dem drehbaren Teil 37 des Drehkranzes 32 eine Plattform 50 befestigt. Auf ihr befindet sich der Bedienungsstand des Aufbaukranes mit seinem Bedienungspult 51 und dem Sitz 52a für die Bedienungsperson. Außerdem ist auf der Plattform 50 ein Druckerzeuger untergebracht, durch den der Aufbaukran autark, d. h. unabhängig von dem Antrieb des Fahrzeuges angetrieben ist. Dazu dient ein Dieselmotor 52, dessen Tank bei 53 gezeichnet ist, wobei die Batterie 54 vor dem Bedienungsstand angeordnet ist. Der Tank für die hydraulische Antriebsflüssigkeit ist bei 55 gezeichnet.

Im Betrieb kann die Ladefläche 5 der Pritsche in beliebiger Reihenfolge beladen werden, da das Portal sich in die jeweils günstigste Stellung zum Be- und Entladen verfahren läßt. Da der Bedienungsstand auf der Brücke des Portals angeordnet ist, hat der Kranfahrer stets die erforderliche Übersicht, um ein exaktes Absetzen der Last zu gewährleisten. Da die Belastung des Kranes von den Portalstützen auf an deren Enden angeordnete Doppelspurkranzrollen 20, 20a verteilt wird, die mit Hilfe der spurkranzlosen Druckrollenpaare 28 und 29 im Eingriff mit ihrer Wälzfläche gehalten werden, ergeben sich beim Verfahren des Kranes keine Traktionsprobleme, zumal der Antrieb des Portalfahrwerkes über die Ritzel 33 auf alle Doppelspurkranzrollen 20, 20a beider Stützen übertragen wird. Die schmalen Laufflächen auf den Profilen 17 des Spurkranzrollengleises führen zur dauernden Selbstreinigung, wobei die Partikel sowohl an der Innen- wie an der Außenseite der Schienen 17 von selbst abgeführt werden.

## Patentansprüche

1. Aufbaukran (6) als Ladehilfe für Pritschenfahrzeuge (1), dadurch gekennzeichnet, daß der Aufbaukran (6) als säulenloser Brückenkran ausgebildet ist, dessen Portal (7) auf dem Fahrgestell (3) des Fahrzeuges (1) geführt und angetrieben ist.

2. Aufbaukran nach Anspruch 1, gekennzeichnet durch einen Wippausleger (38) der auf einem drehbeweglichen Teil (37) eines auf dem Portal (7) angeordneten Drehkranzes (32) angeordnet ist.

3. Aufbaukran nach einem der Ansprüche 1 oder 2, dadurch gekennzeichnet, daß der Wippausleger (38) mit mehreren Teleskopen (40, 42) unterteilt ist.

4. Aufbaukran nach einem oder mehreren der Ansprüche 1 bis 3, dadurch gekennzeichnet, daß der Ausleger (38) als Doppelwippe ausgebildet ist.

5. Aufbaukran nach einem oder mehreren der Ansprüche 1 bis 4, dadurch gekennzeichnet, daß der Ausleger (38) aus seinen Betriebsstellungen in eine horizontale Fahrstellung auf das Portal (7) unter Verkürzung auf die Fahrzeugbreite über eines von zwei Wipplagern (48, 49) und aus der horizontalen Fahrstellung über ein Wipplager (48) nach oben und das zweite Wipplager (49) nach unten schwenkbar ist.

6. Aufbaukran nach einem oder mehreren der Ansprüche 1 bis 5, dadurch gekennzeichnet, daß die Führung des Portals (7) aus einem Spurkranzrollengleis besteht, dessen Schienen (15, 16) selbstreinigend ausgebildet sind.

7. Aufbaukran nach einem oder mehreren der Ansprüche 1 bis 6, dadurch gekennzeichnet, daß die Schienen (15, 16) des Spurkranzrollengleises an Kragträgern (18) des Fahrzeugchassis (3) angeordnet sind und die Selbstreinigung längs der Schienenaußen- und Schieneninnenseite zwischen den Kragträgern (18) und den Längsseiten (12, 14) des Chassis (3) erfolgt.

8. Aufbaukran nach einem oder mehreren der Ansprüche 1 bis 7, dadurch gekennzeichnet, daß die Schienen (15, 16) des Spurkranzrollengleises aus Rechteckprofilen (17) bestehen, welche mit ihrer längeren Zentralachse senkrecht orientiert an den Kragträgern (18) angebracht sind und die sich auf den oberen Schienenschmalseiten (19) abwälzenden Portalrollen (20) als Doppelspurkranzrollen ausgebildet sind sowie mit spurkranzlosen Druckrollen gegen Herausheben zusammenwirken.

9. Aufbaukran nach einem oder mehreren der Ansprüche 1 bis 8, dadurch gekennzeichnet, daß die Spurkranzrollen (20, 20a) an den Enden jeder Portalstütze (9, 10) angeordnet und über einen gemeinsamen Trieb (33) an beiden Portalstützen (9, 10) angetrieben sind.

10. Aufbaukran nach einem oder mehreren der Ansprüche 1 bis 9, dadurch gekennzeichnet, daß das Portal (7) zur Lagerung eines Druckerzeugers (52 - 54, 55) für einen autarken Antrieb des Krans dient.
